# FASCICULE DE BREVET EUROPEEN

(11) **EP 3 239 851 B1**
(45) Date de publication et mention de la délivrance du brevet: **03.06.2020**
(21) Numéro de dépôt: 17168363.4
(22) Date de dépôt: 27.04.2017
(51) Int. Cl.: G06F 13/38

(54) **GESTION DE L'ACCÈS A DES DONNÉES DANS UN SYSTÈME DE STOCKAGE**
VERWALTUNG DES ZUGRIFFS AUF DATEN IN EINEM SPEICHERSYSTEM
MANAGEMENT OF ACCESS TO DATA IN A STORAGE SYSTEM

(30) Priorité: 27.04.2016 FR 1653750
(43) Date de publication de la demande: 01.11.2017
(73) Titulaire: Bull SAS, 78340 Les Clayes-sous-Bois (FR)
(72) Inventeur: GERPHAGNON, Jean-Olivier, 38450 Vif (FR); PICHON, Grégoire, 38320 Poisat (FR); SAUGE, Ludovic, 38100 Grenoble (FR)
(74) Mandataire: Cabinet Camus Lebkiri

(56) Documents cités:
- US-A1- 2007 288 691
- US-A1- 2015 126 288

## Description

### Domaine Technique

La présente invention se rapporte de manière générale au domaine du calcul à haute performance (ou HPC, de l'anglais « *High-Performance Computing* »)*.*

Elle concerne en particulier la gestion de l'accès à des données dans un système de stockage, et trouve des applications, notamment, dans des supercalculateurs. Des supercalculateurs, aussi appelés calculateurs haute performance (CHP), sont utilisés par exemple dans le domaine du calcul scientifique. L'invention peut aussi s'appliquer à des environnements de type grille de calcul (ou « *Cloud-Computing »* en anglais), c'est-à-dire dont les éléments sont distants les uns des autres, éventuellement sur des sites différents.

### Arrière-plan Technologique

Un supercalculateur est un ordinateur conçu pour atteindre les plus hautes performances possibles avec les techniques connues au jour de sa conception, en particulier en ce qui concerne la rapidité de traitement des données (vitesse de calcul). On l'appelle aussi un calculateur à haute performance.

De nos jours, le volume des données traitées par les applications informatiques tournant sur ce type d'ordinateur atteint couramment plusieurs centaines de giga-octets (Go). Il peut aller jusqu'à plusieurs téraoctets (To) pour certaines applications de calcul scientifique (par exemple l'analyse des tremblements de terre, de la météorologie, la modélisation moléculaire), ou pour le calcul stochastique dans le domaine de la finance ou des assurances. Il va sans dire que de tels volumes de données ne peuvent pas être stockés en permanence dans la mémoire centrale de l'ordinateur, ou mémoire vive (RAM, de l'anglais « *Random Access Memory* »)*,* qui est très chère. De plus, la mémoire vive est une mémoire volatile alors qu'un stockage persistant à long terme, permettant de sauvegarder les données traitées ou à traiter pour une utilisation future, est également nécessaire.

C'est pourquoi les données sont stockées dans des mémoires secondaires, non volatiles, sous la forme de fichiers c'est-à-dire de suites structurées de blocs de données. Les mémoires secondaires sont des composants de stockage de masse, par exemple des disques durs (HDD, de l'anglais « *Hard Disc Drive* »). Un bloc de données est la plus petite unité de données que le système de stockage est capable de gérer. Le contenu de ces blocs, simple suite de données binaires, peut être interprété selon le format de fichier comme des caractères, des nombres entiers ou flottants, des codes d'opérations machines, des adresses mémoires, etc.

Les mémoires secondaires forment un système de stockage de masse (ou « *storage* », en anglais) pour le stockage persistant de données dans le supercalculateur. L'échange de données entre la mémoire centrale et ce système de stockage se fait par transfert de blocs.

La fonction d'un système de fichiers (ou FS, de l'anglais « *File System* ») est d'assurer l'accès au contenu des fichiers stockés dans le système de stockage dans les meilleures conditions de rapidité et de fiabilité. L'accès à un fichier localisé à un emplacement donné du système de stockage comprend l'ouverture du fichier et la réalisation d'opérations de lecture ou d'écriture de données dans le fichier. Ces opérations permettent, par exemple, l'enregistrement du fichier, sa copie ou son déplacement dans un autre emplacement, ou sa suppression. Elles sont commandées par des instructions correspondantes d'un programme informatique lorsqu'il est exécuté par un ou plusieurs processeurs du supercalculateur. Ces instructions spécifient un chemin d'accès au fichier. Un tel chemin d'accès est formé, par exemple, d'un nom précédé d'une liste de répertoires imbriqués (sous Windows), ou d'une liste chaînée de fichiers (sous UNIX).

La conception d'un supercalculateur doit assurer que d'importants volumes de données puissent être lus, transférés et stockés rapidement, c'est-à-dire avec des débits d'accès aux composants de stockage relativement important, de l'ordre de plusieurs dizaines ou même plusieurs centaines de giga-octets par seconde (Go/s). Or, le coût d'un supercalculateur est largement fonction de la volumétrie et du débit offerts par le système de stockage.

On sait que l'exécution de travaux utilisant les données stockées sur les composants de stockage du système de stockage est parfois sensible à la vitesse d'accès aux dites données, mais parfois beaucoup moins. Cela signifie que certains travaux sont relativement peu impactés dans leur durée d'exécution (qui détermine l'efficacité du supercalculateur), par le débit d'accès offert par le système de stockage.

Par exemple, le stockage des données représentant l'application (programme et librairies), les données de compilation, les synthèses de résultats, ou certains résultats de visualisation peuvent se satisfaire d'un système de stockage relativement lent. Au contraire, les données intermédiaires des calculs, et les données de sortie ou de visualisation sont plus sensibles à l'efficacité du système de stockage.

### Art Antérieur

Afin de tenir compte des considérations qui précèdent, les environnements de type HPC sont souvent composés de deux sous-systèmes de stockage indépendants, ou plus. En raison de technologies respectives des composants de stockage respectivement associés à ces sous-systèmes de stockage, l'un des sous-systèmes de stockage est relativement rapide et plus ou moins capacitif, et l'autre est relativement lent et très capacitif. Dit autrement, la conception du supercalculateur obéit à la recherche d'un compromis entre les volumétries respectives d'un premier système de stockage offrant un bon débit d'accès mais qui est cher, et un second système de stockage plus capacitif mais offrant un moins bon débit d'accès et qui est moins cher.

Néanmoins, et même en faisant abstraction des différents profils d'accès à gérer, au niveau par exemple des entrées/sorties (E/S), le coût associé à la mise en place de ces deux types de composants de stockage pour deux systèmes de stockage disjoints n'est pas optimal. En effet, la volumétrie globale d'un tel système de stockage composite est augmentée par rapport à celle d'un système de stockage standard, c'est-à-dire unitaire quant à la technologie des composants de stockage et donc au niveau de performance d'accès (notamment en termes de débit et de rapidité d'accès aux données).

Cette solution implique des copies de données entre les deux types de composants de stockage, selon le schéma suivant :
1. Préparation des jeux de données sur le système de stockage de premier niveau (celui qui est relativement le plus lent) ;
2. Copie des données du stockage de premier niveau vers le second niveau (celui qui est relativement le plus rapide) ;
3. Exécution des travaux sur les données présentes sur le système de stockage de second niveau ; et, en option,
4. Recopie des données vers le système de stockage de premier niveau.
Par conséquent, beaucoup d'échanges de données sont nécessaires entre les différents sous-systèmes de stockage, ce qui implique un surcoût également en temps et en opérations supplémentaires.
Est également connu le document US2015/126288 qui décrit un système de traitement et d'enregistrement d'information servant, entre autres, d'interface à un utilisateur pour accéder à des contenus originellement situés sur un serveur afin de les exploiter/exécuter.

### Résumé de l'Invention

L'invention vise à supprimer, ou du moins atténuer, tout ou partie des inconvénients de l'art antérieur précités.

A cet effet, un premier aspect de l'invention propose un procédé de gestion d'un système de fichiers pour l'accès à des données dans un système de stockage dans lequel les données sont stockées physiquement de manière unique. Le procédé comprend :
- le montage, à partir d'un premier point de montage, d'un premier environnement de stockage associé à un premier ensemble de paramètres d'accès, pour accéder à tout ou partie des données stockées physiquement de manière unique dans le système de stockage, avec un niveau de performance d'accès déterminé par ledit premier ensemble de paramètres ;
- le montage, à partir d'un second point de montage et avec recouvrement total ou partiel de données par rapport au premier environnement de stockage, d'au moins un second environnement de stockage, différent du premier environnement de stockage, et associé à un second ensemble de paramètres d'accès, différent du premier ensemble de paramètres d'accès, pour accéder à tout ou partie des données stockées physiquement de manière unique dans le système de stockage, avec un niveau de performance d'accès déterminé par ledit second ensemble de paramètres d'accès ; et,
- l'accès par l'utilisateur aux données physiquement stockées de manière unique dans le système de stockage, soit via le premier point de montage soit via le second point de montage, en fonction d'un cas d'usage des données.

L'invention permet d'offrir une gestion fine des performances d'accès associées à un ensemble de données présentes de façon unique sur un même système de stockage, en fonction de son utilisation. Cela évite la recopie des données entre différents systèmes ou sous-systèmes de stockage, tout en offrant les mêmes performances par rapport aux solutions de l'art antérieur.

Selon des modes de réalisation, pris isolément ou en combinaison :
- le premier environnement de stockage et le second environnement de stockage peuvent être tous les deux des environnements virtuels pointant vers un troisième environnement de stockage pour permettre l'accès aux données dudit troisième environnement de stockage avec un niveau de performance d'accès déterminé par le premier ensemble de paramètres d'accès ou par le second ensemble de paramètres d'accès, respectivement ;
- le troisième environnement de stockage peut être associé à un troisième ensemble de paramètres d'accès, différent du premier ensemble de paramètres d'accès et du second ensemble de paramètres d'accès ; et/ou,
- le troisième ensemble de paramètres d'accès peut définir un niveau de performance d'accès spécifique à un administrateur, lequel niveau de performance d'accès n'est pas accessible à un utilisateur qui n'est pas administrateur.

En variante, le premier environnement de stockage peut être un environnement de stockage de référence et le second environnement de stockage peut être un environnement de stockage virtuel pointant sur le premier environnement de stockage pour permettre l'accès aux données dudit premier environnement de stockage avec un niveau de performance d'accès déterminé par le second ensemble de paramètres d'accès.

Dans un mode de mise en œuvre, le second environnement de stockage possède un attribut indiquant qu'il est un environnement de stockage virtuel et présente un niveau de performances d'accès différent de celui de l'environnement de stockage de référence sur lequel il pointe.

Dans des exemples d'utilisation du procédé, le système de fichiers peut être un système GPFS, et le premier environnement de stockage et le second environnement de stockage peuvent être des filesets GPFS.

L'invention est compatible avec les applications dans lesquelles le système de fichiers est un système de fichiers distribués. Elle peut néanmoins être mise en œuvre dans un système de fichiers parallèle, ou un système de fichiers distribué et parallèle (c'est-à-dire à l'intersection du domaine des systèmes distribués et du domaine des architectures parallèles), ou tout simplement dans un système de fichiers réseau.

Un deuxième aspect de l'invention se rapporte à un produit programme d'ordinateur comportant des instructions pour la mise en œuvre d'un procédé selon le premier aspect de l'invention ci-dessus, lorsque le programme est exécuté par au moins un processeur. Ce produit programme d'ordinateur peut notamment être exécuté par des moyens de traitement pour gérer un système de fichiers pour l'accès à des données dans un système de stockage au sein d'un calculateur haute performance (CHP).

Un troisième aspect de l'invention se rapporte à un système de traitement de données, sous la forme par exemple d'un supercalculateur, comprenant des équipements techniques d'ordre matériel et d'ordre logiciel pour la mise en œuvre du procédé selon le premier aspect de l'invention ci-dessus. Un tel système de traitement de données peut être un calculateur haute performance (CHP) comportant un ensemble de nœuds de service ayant des ressources de différents types aptes chacun à réaliser au moins une opération, un système de stockage dans lequel des données sont stockées physiquement de manière unique, et des ressources de traitement aptes à gérer un système de fichiers pour l'accès à des données dans ledit système de stockage selon le procédé selon le procédé selon le premier aspect, par exemple sous la commande d'un produit programme d'ordinateur selon le deuxième aspect.

Le programme d'ordinateur et le système présentent au moins les mêmes avantages que ceux procurés par le procédé selon le premier aspect de l'invention.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel très simplifié d'un calculateur haute performance (CHP) ou supercalculateur ;
- la Figure 2 est un schéma synoptique d'un système de fichiers du type du système de fichiers parallèle et haute performance d'IBM connu sous l'acronyme GPFS (mis pour « *General Parallel File System* », en anglais), illustrant le principe des filesets connus dans ce type de système de fichiers;
- la Figure 3 est un schéma synoptique d'un système de fichiers conforme à des modes de mise en œuvre de la présente invention ; et,
- la Figure 4 est un diagramme d'étapes illustrant un procédé selon des modes de mise en œuvre de l'invention.

### Description détaillée de modes de réalisation

En informatique, un supercalculateur est un calculateur haute performance (CHP) qui comporte un ensemble de ressources informatiques, *i.e.* des ressources matérielles ou non matérielles, lesquelles permettent l'exécution de tâches de calcul ou le stockage de données numériques.

Les ressources matérielles comprennent par exemple, et de manière non limitative : des composants électroniques rapides (par exemple des processeurs multi-cœurs ou des cartes graphiques dédiées au calcul scientifique de dernière génération), de la mémoire vive, et des équipements de stockage de masse ou mémoires secondaires, en particulier des disques durs en grande quantité.

Tous ces équipements sont associés à un système d'exploitation (OS, de l'anglais « *Opération System* ») dédié, comme par exemple Windows, ou plus fréquemment UNIX ou l'une de ses déclinaisons comme Linux. Un programme d'application (logiciel) s'exécute sur cet OS, qui est conçu pour assurer la gestion globale des ressources matérielles en tirant profit de leurs potentialités en termes de performance. Ceci est obtenu, notamment, en exploitant le parallélisme et en rendant transparente la distribution desdites ressources matérielles.

Des ressources non matérielles peuvent être de tout type dès lors qu'il s'agit de services configurables qui sont utiles au CHP ou à une application tournant dans ce calculateur. Ainsi, il peut par exemple s'agir d'un service (NFS ou *postgresql,* par exemple), ou d'un système de fichiers partagé entre des nœuds sur une baie de stockage, ou d'une adresse IP (« *Internet Protocol* »)*.*

D'un point de vue fonctionnel, un CHP est une machine qui agrège les ressources ci-dessus pour former un cluster de calcul.

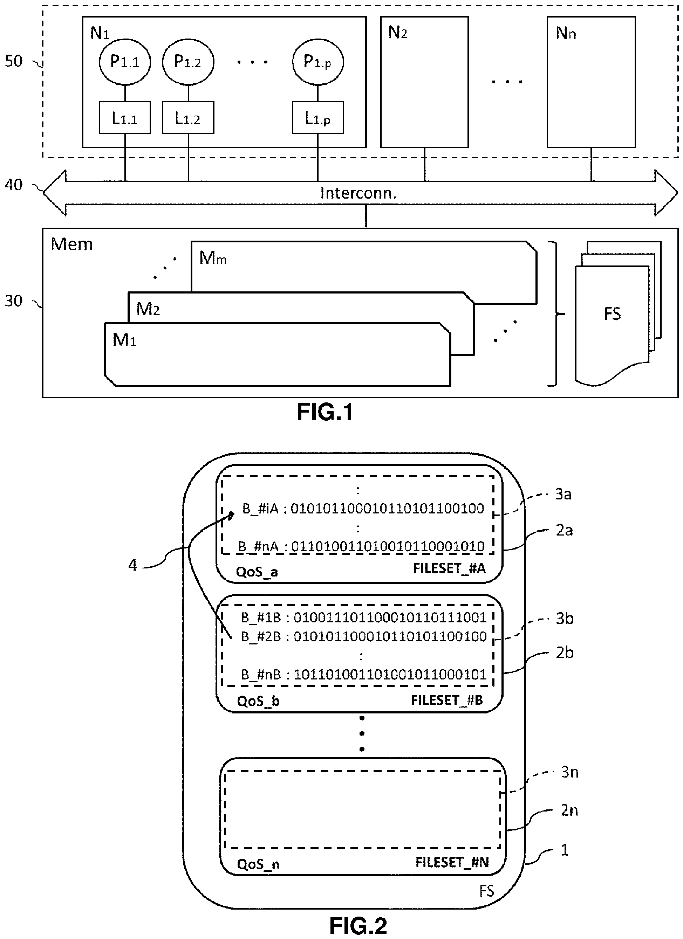

En référence au schéma fonctionnel de la Figure 1, un exemple de CHP comprend un ensemble 50 de *n* nœuds de service, N₁, N₂, ... Nₙ, respectivement, par exemple des nœuds de calcul, un système de stockage de données 30, et un système d'interconnexion 40.

Chacun des nœuds de calcul N₁, N₂, ... Nₙ de l'ensemble 50 comprend un ou plusieurs processeurs, des périphériques d'entrée/sortie (E/S), et de la mémoire. Un tel nœud de calcul est par exemple un ordinateur dit monoprocesseur (PC), une station de travail, un SMP (de l'anglais « Symmetric shared memory Multi-Processor »), etc.

Un nœud de calcul comprend une pluralité de cœurs de processeur dans un ou plusieurs processeurs mono-cœurs ou multi-cœurs, avec de la mémoire physique associée. Plus particulièrement, chacun des processeurs comprend un cœur ou une pluralité de cœurs avec plusieurs Go de mémoire cache par cœur.

Ainsi, dans l'exemple représenté à la Figure 1, par exemple, le premier nœud N₁ comprend un nombre p de cœurs P_{1.1}, P_{1.2}, ... P_{1.p}, respectivement, auxquels sont associées des mémoires cache L_{1.1}, L_{1.2}, ... L_{1.p}, respectivement. Dans le langage de l'Homme de métier, un cœur est une unité de calcul (avec au moins une unité arithmétique et logique ou UAL, et des registres qui stockent les opérandes et résultats intermédiaires de calcul), et un processeur est formé d'un cœur avec la mémoire cache associée.

La mémoire cache (par exemple de la mémoire statique SRAM) comprend plusieurs Ko de mémoire cache L1, dont en général une moitié pour les données et une autre moitié pour les instructions. La mémoire cache comprend aussi un cache L2 par cœur, par exemple de quelques centaines de Ko ou de quelques Mo, et un cache L3 (LLC, de l'anglais « *Last Level Cache* »), par exemple de quelques dizaines ou centaines de Mo, partagé entre les cœurs d'un processeur.

Chaque nœud est cadencé par une horloge, par exemple, à 2.7 GHz. La plupart des nœuds de calcul n'ont pas de disque interne, bien que certains nœuds puissent avoir un ou plusieurs disques internes pour les travaux nécessitant l'écriture de fichiers temporaires volumineux. C'est pourquoi, le système est chargé en mémoire centrale (par exemple de la mémoire dynamique DRAM) lors du démarrage de la machine.

Les nœuds de calcul sont interconnectés entre eux et avec le système de stockage de données 30 par le système d'interconnexion 40. Celui-ci peut être un bus d'entrée/sortie (E/S) ou un réseau d'interconnexion à haut débit et à faible latence. Un tel réseau est par exemple InfiniBand, OmniPath, etc.

Le système d'interconnexion 40 est caractérisé par :
- sa bande passante en mode uni- ou bidirectionnel, c'est-à-dire le débit de données (exprimé par exemple en Go/s) ;
- sa latence c'est-à-dire le temps de la transmission d'une donnée (exprimée par exemple en µs) ; et,
- sa topologie c'est-à-dire le type d'arborescence du réseau entre les nœuds ou les racks.

Le débit du système d'interconnexion 40 est par exemple de l'ordre de quelques dizaines ou centaines de Go/s. La latence est par exemple de quelques microsecondes (µs). La topologie du réseau d'interconnexion peut être en étoile ou en forme d'arbre (« *Fat tree* » en anglais), par exemple à un, deux ou trois « étages» ou niveaux de commutateur (« *switch* », en anglais). D'autres exemples de topologie sont le tore 3D, l'hypercube, etc.

Ce réseau d'interconnexion est utilisé pour les communications MPI (« *Message Passing Interface* ») inter-nœuds et les entrées/sorties (E/S) depuis et vers le système de fichiers FS.

Le système de stockage de données 30 comprend par exemple un nombre m de disques de stockage de données M₁, M₂, ... Mₘ, comme des disques durs (HDD). Ces disques constituent la mémoire physique du CHP pour le stockage des données traitées, et des résultats des calculs. La gestion des ressources qui sont partagées par les nœuds est assurée par un logiciel, à savoir le programme d'application précité, via des scripts comportant des cibles ou opérations (un script par type de ressource).

Dans, ou du moins pour le système de stockage 30, ce programme d'application crée un système de fichiers FS, par exemple GPFS dans des modes de réalisation, permettant l'accès aux données dans les disques via au moins un point de montage. En informatique, un point de montage est un répertoire ou un fichier à partir duquel sont accessibles les données se trouvant sous forme d'un système de fichiers sur une partition de disque dur ou un périphérique.

On appréciera que le système de fichiers FS permet le stockage d'informations sur des équipements physiques distincts, à savoir les disques durs M₁, M₂, ... Mₘ constituant les ressources matérielles du système de stockage 30 de la Figure 1. De cette manière, du point de vue de l'utilisateur, tout se passe comme si les données étaient stockées sur un support unique. L'utilisateur s'entend ici du programme d'application précité qui s'exécute sur le supercalculateur.

C'est une façon de stocker les informations et de les organiser dans des fichiers sur les mémoires M₁, M₂, ... Mₘ système de stockage de données 30. Une telle gestion des fichiers permet de traiter, de conserver des quantités importantes de données ainsi que de les partager entre plusieurs programmes informatiques. Il offre à l'utilisateur une vue abstraite sur ses données et permet de les localiser à partir d'un chemin d'accès. Il existe d'autres façons d'organiser les données, par exemple les bases de données (notamment base de données relationnelle) et les fichiers indexés.

D'un point de vue matériel, la machine CHP peut être divisée en une pluralité de baies (« *Rack* » en anglais). La totalité ou la majorité des baies sont des baies de calcul ou des baies de stockage de données. Dans le langage de l'Homme de métier, une baie de calcul désigne couramment un ensemble de nœuds reliés par un réseau d'interconnexion, par exemple l'ensemble de nœuds 41 reliés via le système d'interconnexion 40 de la Figure 1. Une ou plusieurs baies de stockage de données comprennent aussi les m disques de stockage de données M₁, M₂, ... Mₘ constituant le système de stockage 30 et sur lesquels est monté le système de fichiers FS.

Des modes de mises en œuvre de l'invention sont basés sur le concept de « filesets ». Ces filesets sont présents, par exemple, sur le système de fichiers parallèle haute performance d'IBM appelé GPFS. Ils permettent d'avoir deux niveaux de découpe de la capacité de stockage physique par le système de fichiers, plutôt qu'un seul niveau de découpe par système de fichiers comme il se fait communément. L'idée derrière ce concept est d'avoir, sur un même système de fichiers, l'équivalent de fichiers ou de répertoires distincts qui sont traités comme des systèmes de fichiers différents du point de vue des performances d'accès à la mémoire physique. En effet, chaque fileset peut avoir des paramètres d'accès qui lui sont propres. Ces paramètres d'accès comprennent notamment les quotas, le nombre E/S par seconde, la configuration de backup, les propriétés de réplication, etc.

Les paramètres d'accès ci-dessus définissent pour chacun des filesets un niveau de performance d'accès respectif, qui est dénommé « QoS » (de l'anglais « *Quality Of Service* ») dans le cadre de la présente description, car il renvoie à un ensemble de paramètres caractérisant la performance globale de l'accès aux données : débit utile sur le réseau, nombre d'E/S par seconde, etc.

Ces filesets sont déjà utilisés, par exemple dans GPFS, afin de pallier les inconvénients résultant du fait que les composants de stockage physique sont de préférence tous d'une même et unique technologie, afin d'homogénéiser la capacité de stockage. La conséquence de cette homogénéité est que tous les composants de stockage physique présentent des caractéristiques identiques déterminées par la technologie. Les filesets permettent ainsi à l'utilisateur de créer, sur un seul et même stockage physique, au moins deux filesets différents avec chacun des « performances » associées, en termes d'accès aux données, qui peuvent varier d'un fileset à l'autre.

Cela permet de proposer des configurations comme illustré schématiquement à la Figure 2.

En référence à cette figure, différents filesets 2a, 2b, ... 2n sont montés au sein d'un système de fichiers 1, qui permettent l'accès à des données dans des zones mémoires 3a, 3b, ... 3n, respectivement, d'un système de stockage physique du calculateur à haute performance. A la Figure 2, ces zones mémoires distinctes 3a, 3b, ... 3n sont représentées par des cadres en traits pointillés. Ainsi qu'on le voit, une partie respective 3a, 3b, ... 3n de la mémoire globalement offerte par le système de stockage, est ainsi attribuée à chacun des filesets 2a, 2b, ... 2n, respectivement. Ceci est plus particulièrement symbolisé par le fait que les cadres en traits pointillés représentants les parties respectives 3a, 3b, ... 3n de la mémoire sont disjoints entre eux.

Dans les espaces mémoires 3a, 3b, ... 3n du support de stockage, les données sont stockées sous forme de blocs de données de même taille. Par exemple, pour le fileset 2b, il peut être stocké un nombre nB de blocs de données B_#1B, B_#2B, ... B#nB, respectivement, dans l'espace mémoire 3b. Bien entendu, la capacité mémoire de chaque fileset, exprimée comme le nombre de blocs de données qui peuvent être accédés via le point de montage dudit fileset, peut varier d'un fileset à l'autre.

Chaque fileset 2a, 2b, ... 2n, permet l'accès aux données de son espace mémoire associé 3a, 3b, ... 3n, respectivement, avec un niveau de performance (QoS) noté QoS_a, QoS_b, ... QoS-n, respectivement, à la Figure 2. Par exemple, le fileset 2a peut offrir un débit de 198 Gb/s alors que le fileset 2b peut n'offrir qu'un débit plus faible de 2 Gb/s. On dit alors que le premier est relativement rapide alors que le second est relativement lent. On notera que deux filesets peuvent avoir un certain paramètre d'accès identique, par exemple le débit, mais différer par un autre paramètre, par exemple les quotas, la configuration de backup, les propriétés de réplication, etc.

Selon le cas d'usage des données stockées dans le support de stockage du calculateur, le programme d'application peut être conçu pour préalablement transférer des données à traiter, depuis un premier fileset dans un second fileset. Ceci afin de pouvoir tirer parti, pour le traitement à effectuer ensuite, de la meilleure performance d'accès dudit second fileset par rapport audit premier fileset. Toujours selon le cas d'usage, ce transfert de données peut être un déplacement (i.e., avec suppression des données du fileset de départ une fois les données écrites dans le fileset de destination) ou une copie (i.e., écriture des données dans le fileset de destination sans suppression des données dans le fileset de départ).

Dans l'exemple représenté à la Figure 2, des données stockées dans le fileset 2b (relativement lent) qui comprennent le bloc de données B_#2B sont ainsi transférées dans le fileset 2a (relativement rapide), afin d'y être utilisées pour une tâche en cours de préparation et dont l'exécution ultérieure nécessitera un accès rapide à au support de stockage. Ce transfert est illustré à la Figure 2 par la flèche 4 en ce qui concerne le bloc de données B_#2B de la zone mémoire 3b associée au fileset 2b, qui est écrit dans le bloc B_#iA de la zone mémoire 3a associée au fileset 2a. Bien entendu, si le cas d'usage des données appelle un traitement pour lequel c'est un autre paramètre que le débit d'accès qui est prépondérant, les données en question peuvent devoir être transférées dans la zone mémoire associée à une autre fileset, dont le niveau de performance pour ce paramètre est meilleur.

En d'autres termes, et en revenant à l'exemple décrit ci-dessus, le montage de différents filesets avec des niveaux de performance d'accès associés respectifs permet une meilleure exécution de certaines tâches dans le supercalculateur. Néanmoins, une recopie de données dans l'espace mémoire associé au fileset rapide est nécessaire afin de pouvoir bénéficier de la performance de ce fileset rapide en termes de rapidité d'accès.

Il s'ensuit que des mêmes données, *i.e.* des mêmes blocs de données sont généralement dupliqués dans le système de stockage : ils sont stockés dans différentes zones mémoires associées à différents filesets, respectivement. Et on y accède via le point de montage de l'un ou l'autre de ces filesets en fonction du cas d'usage qui détermine le niveau de QoS requis pour l'accès à ces données.

La configuration du système de fichier est donc meilleure du point de vue de l'unité du système de stockage au niveau physique, car on peut avoir un seul type de technologie de mémoire et avoir néanmoins des performances d'accès différentes qui sont attribuées en raison du découpage du système de fichiers en différents filesets. Mais cet avantage est obtenu au prix d'une capacité mémoire requise plus importante, car les données doivent être recopiées dans l'environnement mémoire le plus adapté à chaque cas d'usage. Dans un tel scénario, les données doivent être physiquement déplacées entre les deux filesets (i.e., copiées dans l'environnement de destination puis éventuellement supprimées de l'environnement de départ) car ceux-ci sont considérés comme étant des environnements indépendants avec chacun leurs données propres. Ceci implique une consommation globale de la capacité de stockage qui est supérieure, et des opérations de transferts de données additionnelles qui sont coûteuses en temps et en énergie.

C'est pourquoi la notion de fileset, en tant que telle, est insuffisante à résoudre le problème exposé en introduction de la présente description.

Des modes de réalisation de l'invention, au contraire, permettent de ne plus avoir besoin de transférer des données entre différents environnements de stockage et pourtant de pouvoir bénéficier d'un niveau de performance spécifique selon le cas d'usage desdites données.

La solution proposée, conformément à des modes de mise en œuvre, est basée sur un principe de gestion de fichiers que l'on trouve par exemple sur les systèmes Unix avec la notion de liens entre fichiers (ou répertoires) d'un système de fichiers.

Sous Unix, un lien permet à partir de « noms » différents d'accéder à de mêmes données, c'est-à-dire aux données stockées à un même et unique emplacement dans le stockage physique.

Par exemple, le script ci-dessous définit deux fichiers liés entre eux :

| |
|---|
| ```
     $ echo toto >> / tmp/monfichier
     $ cat /tmp/monfichier
     toto
     $ In -s /tmp/monfichier /tmp/monautrenomdefichier
     $ cat /tmp/monautrenomdefichier
     toto
``` |

Dans l'exemple ci-dessus, l'utilisateur crée deux fichiers, à savoir un premier fichier appelé « *monfichier »* et un second fichier appelé *« monautrenomfichier »* qui est lié au premier. Il n'existe cependant qu'un seul fichier sur le stockage physique, le second fichier n'étant qu'un lien virtuel pointant sur les mêmes données que le premier fichier. Le lien est dit « virtuel » en ce sens que les relations entre les fichiers n'existent pas au niveau matériel, et n'existent que d'un point de vue logique uniquement.

On notera que ce principe de liens n'existe actuellement que dans le contexte d'un seul et même système de fichiers. En tant que tel, il ne permet donc pas de gérer des différences de performances d'accès selon les noms respectifs de fichiers parmi une pluralité de fichiers, ou selon l'endroit où se trouvent lesdits fichiers. Il s'agit juste d'un autre nom pour le même fichier (ou répertoire).

C'est pourquoi la notion de lien entre fichiers (ou répertoires), en tant que telle, est également insuffisante pour résoudre le problème exposé en introduction de la présente description.

Le principe de l'invention est toutefois basé sur l'extension de la notion de lien virtuel à des environnements de stockage présentant des caractéristiques propres d'accès à la mémoire comme, notamment mais pas uniquement, des filesets.

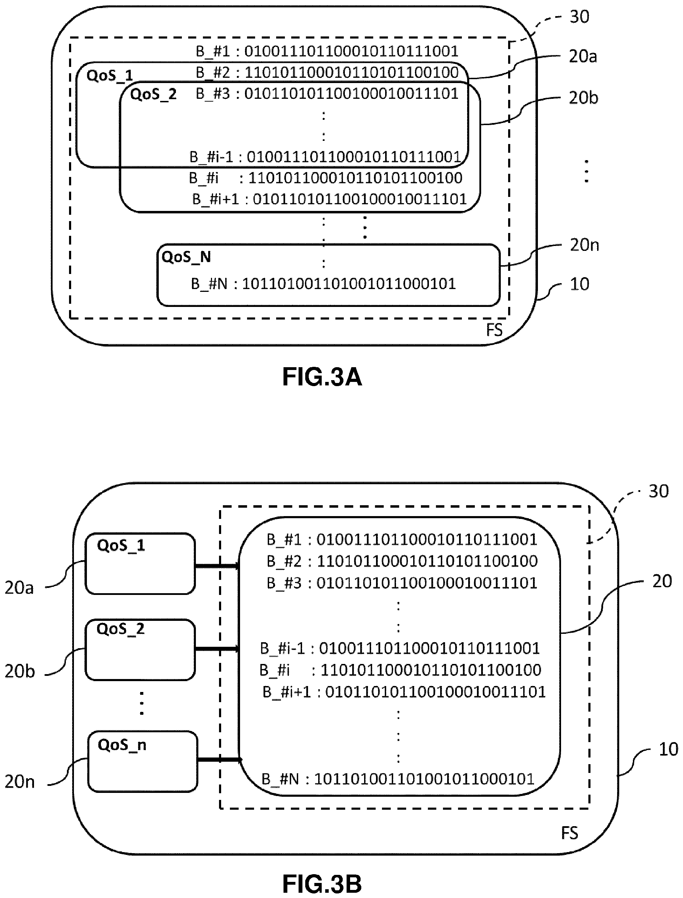

Ce principe va tout d'abord être décrit de manière générale en référence au schéma simplifié de la Figure 3A.

Plus particulièrement, il est proposé de gérer un système de fichiers 10 pour l'accès à des données dans un système de stockage 30 dans lequel les données sont stockées physiquement de manière unique. L'unicité du stockage des données dans le système de stockage 30 est symbolisée, à la Figure 3A, par un cadre en traits pointillés unique. Le système de stockage 30 peut stocker un nombre N de blocs de données, respectivement notés B_#1, ..., B_#i, ..., B_#N à la Figure 3A.

Pour l'accès aux données dans le système de stockage 10, cependant, il est monté un système de fichiers avec au moins deux points de montage distincts, et plus généralement un nombre n de points de montage, associés à n environnements de stockage 20a, 20b, ... 20n, respectivement.

Ainsi, plus particulièrement le premier environnement de stockage 20a est monté à partir d'un premier point de montage, en étant associé à un premier ensemble de paramètres d'accès pour accéder à au moins une première partie des données stockées physiquement dans le système de stockage 30. L'accès aux données via ce premier point de montage se fait donc avec un niveau de performance d'accès QoS_1 déterminé par ledit premier ensemble de paramètres d'accès.

On monte en outre, à partir d'un autre point de montage, le deuxième environnement de stockage 20b qui associé à un autre ensemble de paramètres d'accès, pour accéder à une deuxième partie au moins des données stockées physiquement dans le système de stockage 30. Il peut y avoir recouvrement, total ou partiel, de cette deuxième partie de données avec la première partie des données qui sont accessibles par l'intermédiaire du premier environnement de stockage 20a. L'accès aux données via cet autre point de montage se fait toutefois avec un niveau de performance d'accès QoS_2 associé à l'environnement de stockage 20b, qui est différent du niveau de performance QoS_1, et qui est déterminé par l'autre ensemble de paramètres d'accès ci-dessus.

L'accès par l'utilisateur aux données qui sont communes aux deux environnements 20a et 20b mais sont physiquement stockées de manière unique dans le système de stockage 30, peut alors de faire soit via le point de montage de l'environnement 20a, soit via le point de montage de l'environnement 20b, en fonction du cas d'usage des données. Le choix du point de montage utilisé pour accéder aux données est conditionné par le niveau de performance d'accès requis pour l'usage prévu des données.

On notera que le volume de données (exprimé en nombre de blocs de données) accessibles via chaque environnement de stockage du système de fichiers 20a, ... 20n peut varier d'un environnement à l'autre. De plus, un ou plusieurs environnements peuvent permettre l'accès à l'intégralité des N blocs B_#1 à B_#N du système de stockage 30. Egalement, l'un au moins des environnements de stockage, comme l'environnement 20n représenté à la Figure 3A, peut être le seul et unique environnement de stockage du système de fichiers à permettre l'accès à certains blocs de données déterminés.

Dans un exemple illustré par le schéma simplifié de la Figure 3B, les environnements de stockage 20a, 20b, ..., 20n sont des environnements virtuels pointant vers un autre environnement de stockage 20 pour permettre l'accès aux données dudit autre environnement de stockage 20 avec un niveau de performance d'accès spécifique QoS_1, QoS_2,..., QoS_n, respectivement.

Un mode de mise en œuvre conforme à cet exemple peut comprendre la création de deux filesets associés chacun à des performances d'accès respectives, et qui sont liés tous les deux à un même et unique troisième fileset, lequel permet l'accès effectif aux données. Par exemple, sous Unix, on peut ainsi avoir :
- un premier fileset /*home* relativement lent, qui est associé à un niveau de performances d'accès *QoS-Slow* comprenant un débit d'accès de, par exemple, 2 Go/s ;
- un second fileset /*scratch* relativement rapide, qui est associé à un niveau de performance d'accès *QoS-Fast* comprenant un débit d'accès de, par exemple, 198 Go/s ; et,
- les filesets /*home* et /*scratch* sont liés tous les deux à un troisième fileset /*real,* qui peut par exemple être associé à un niveau de performances d'accès spécifique aux administrateurs et non-accessible aux utilisateurs.

Par exemple, la commande *mmlinkfileset* permet de créer un lien (*i.e.,* une jonction) qui référence le répertoire racine d'un système de fichiers de type GPFS. Sa syntaxe d'utilisation est la suivante :

### mmlinkfileset Device FilesetName [-J JunctionPath]

Dans des modes de réalisation, le fileset /*home* et le fileset /*scratch* peuvent être ainsi liés au fileset /*real* ce qui donne, lors de l'édition d'un listing des trois filesets, le même contenu d'information (*i.e*., les mêmes blocs de données) stocké au même emplacement physique :

| |
|---|
| ```
     $ ls /real
     Permission denied
     $ su -
     $ ls /real
     fileA
     fileB
     fileC
     $ filefrag -v /real/fileA
     File size of /real/fileA 285212672 (278528 blocks of 1024 bytes)
     ext: device_logical: physical_offset: length: dev: flags:
     0: 0.. 122879: 4679680..4802559: 122880: 0002: network
     1: 122880.. 245759: 4817920..4940799: 122880: 0002: network
     2: 245760.. 278527: 4948992..4981759: 32768: 0002: network
 
     $ ls /home
     fileA
     fileB
     fileC
     $ filefrag -v /home/fileA
     File size of /home/fileA 285212672 (278528 blocks of 1024 bytes)
     ext: device_logical: physical_offset: length: dev: flags:
     0: 0.. 122879: 4679680..4802559: 122880: 0002: network
     1: 122880.. 245759: 4817920..4940799: 122880: 0002: network
     2: 245760.. 278527: 4948992..4981759: 32768: 0002: network
 
     $ ls /real
     fileA
     fileB
     fileC
     $ filefrag -v /scratch/fileA
     File size of /scratch/fileA 285212672 (278528 blocks of 1024 bytes)
     ext: device_logical: physical_offset: length: dev: flags:
     0: 0.. 122879: 4679680..4802559: 122880: 0002: network
     1: 122880.. 245759: 4817920..4940799: 122880: 0002: network
     2: 245760.. 278527: 4948992..4981759: 32768: 0002: network
``` |

On notera cependant que les données ne sont physiquement présentes au niveau physique que dans l'espace de stockage associé au fileset /*real.* Il n'y a d'ailleurs pas d'espace de stockage physique associé aux filesets/*home* et /*scratch.* Les fileset /*home* et /*scratch* ne sont que des liens virtuels pointant sur les données du fileset /*real.*

Lorsque l'accès se fait via la point de montage du fichier /*home,* la performance maximale est bornée par le niveau de performance *QoS-Slow.* Des cas d'usage correspondants sont par exemple la préparation avant la soumission des travaux, la compilation, etc. Par contre, si l'accès aux mêmes données (*i.e.,* aux données stockées au même emplacement dans le stockage physique) se fait via le fichier /*scratch,* alors la performance maximale est bornée par le niveau de performance *QoS-Fast.*

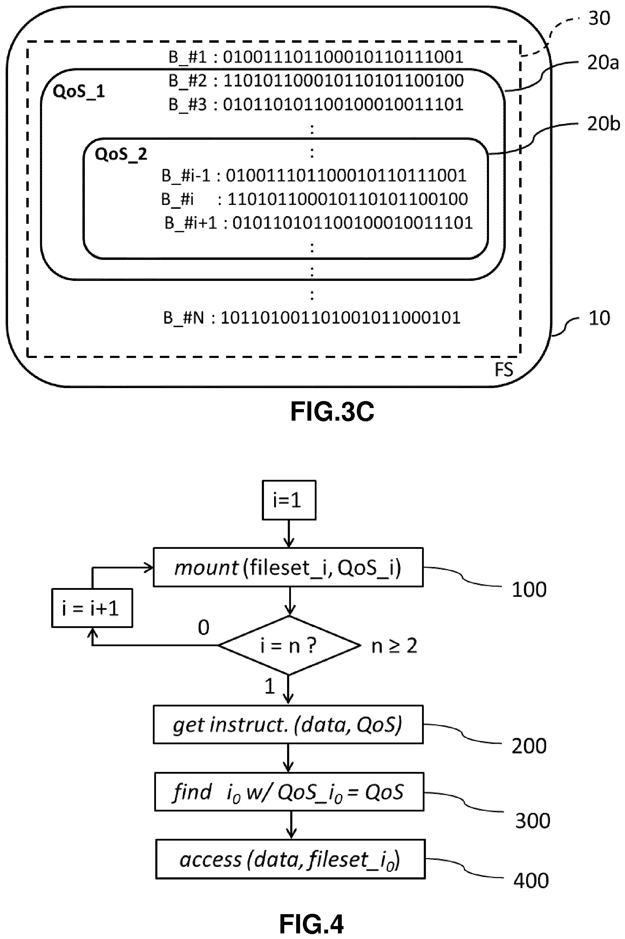

Dans un deuxième mode de mise en œuvre illustré par le schéma simplifié de la Figure 3C, le second environnement de stockage 20b peut être un environnement virtuel pointant vers le premier environnement de stockage 20a, pour permettre l'accès aux données dudit premier environnement de stockage 20a avec un niveau de performance d'accès QoS_2 déterminé par le second ensemble de paramètres d'accès, différent du niveau QoS_1 associé à l'environnement 20a.

Un exemple de réalisation peut consister à définir, dans un attribut spécifique des filesets, qu'un fileset déterminé peut n'être qu'un réplica « virtuel » (*i.e.* une réplique virtuelle) d'un autre fileset. Cet attribut permet de monter un fileset virtuel pointant sur un fileset de référence en indiquant que le fileset ainsi monté n'est pas un environnement de stockage réel mais est uniquement un pointeur vers un autre fileset qui lui seul est associé à un environnement de stockage stockant réellement des données, mais en indiquant qu'il présente un niveau de performances d'accès différent de celui dudit fileset de référence. En d'autres termes, le fileset ainsi monté peut être un fileset « fils » qui hérite de son fileset « parent » de droits d'accès lui permettant d'accéder à tout ou partie des données accessibles par ledit fileset parent, mais sans bénéficier du même niveau de performance d'accès que celui que possède ce fileset parent.

Dans l'exemple représenté à la Figure 3C, les blocs de données accessibles via l'environnement 20b sont tous compris dans les données accessibles via l'environnement 20a.

La solution selon les modes de mise en œuvre donnés ci-dessus permet d'accéder aux données selon différents niveaux de QoS tout en évitant la réplication de données (et donc des mouvements de données). On fait ainsi l'économie de l'augmentation de la capacité de stockage nécessaire pour gérer la duplication de données induite par les solutions de l'art antérieur.

La Figure 4 est un diagramme d'étapes illustrant les principales étapes d'un procédé de gestion d'un système de fichiers pour l'accès à des données dans un système de stockage dans lequel les données sont stockées physiquement de manière unique, comme le système de stockage 30 des Figures 3A-3C.

On réalise tout d'abord le montage 100, à partir d'un premier point de montage, d'un premier environnement de stockage comme par exemple un fileset *fileset_1* à tout ou partie des données stockées physiquement de manière unique dans le système de stockage, avec un niveau de performance d'accès QoS_1. Ce niveau QoS_1 est déterminé par un premier ensemble de paramètres d'accès pour accéder aux données via l'environnement de stockage *fileset_1.*

L'étape 100 est répétée un nombre n de fois, où n est un nombre entier supérieur ou égal à 2 (n ≥ 2). Notamment, on réalise le montage, à partir d'un second point de montage d'au moins un second environnement de stockage comme un fileset *fileset_2,* différent du fileset *fileset_1.* Ce second environnement de stockage et associé à un second ensemble de paramètres d'accès, différent du premier ensemble de paramètres d'accès, pour accéder à tout ou partie des données stockées physiquement dans le système de stockage, avec un niveau de performance d'accès QoS_2 déterminé par ledit second ensemble de paramètres d'accès. Il peut y avoir recouvrement total ou partiel de données accessibles via le second environnement de stockage *fileset_2,* avec les données accessibles par le premier environnement de stockage *fileset_1.* En pratique, le nombre n dépend des spécificités de l'application, *i.e.* n est le nombre de profils d'utilisation des données qui appellent un niveau de performances d'accès aux données spécifique.

En 200, le planificateur (« *Scheduler* », en anglais) chargé de préparer les opérations nécessaires à l'exécution d'instructions comprises dans le programme d'utilisateur avant leur exécution effective par un (ou plusieurs) processeur(s), reçoit une instruction impliquant l'accès à des données dans le système de stockage avec un niveau de performance d'accès QoS déterminé.

En 300, le planificateur identifie l'environnement d'accès qui est approprié pour accéder aux données dans les mémoires secondaires du système de stockage, en fonction d'un cas d'usage des données, sur la base du niveau de performance d'accès QoS requis. Cela consiste dans l'exemple ci-dessus, à sélectionner l'un des filesets *fileset_1* et *fileset_2,* et plus généralement à déterminer le fileset *fileset_i₀* dont le niveau de performances QoS_i₀ est égal au niveau de performances QoS requis.

En 400, on accède aux données nécessaires, qui sont physiquement stockées de manière unique dans le système de stockage, soit via le point de montage du fileset *fileset_1* soit via le point de montage du fileset *fileset_2,* et plus généralement via le point de montage du fileset *fileset_i₀* qui a été sélectionné en 300.

Pour résumer, la solution proposée permet de gérer des liens virtuels entre les contenus de différents environnement de stockage d'un système de fichiers, comme par exemple des filesets du système GPFS de IBM, pour définir des propriétés différentes comme les performances d'accès, par exemple, suivant le fileset utilisé pour accéder aux données. Cette fonctionnalité permet de réduire la volumétrie (et donc le coût) des supports de stockage.

La présente invention a été décrite et illustrée dans la présente description détaillée et dans les Figures en rapport avec des modes de mise en œuvre envisageables ou envisagés. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Notamment, rien n'empêche d'utiliser l'enseignement de la présente invention dans le contexte d'un système de fichiers distribués permettant d'accéder à des données stockées physiquement sur une grappe de serveurs *(« Computer Cluster»* en anglais), plutôt que dans le contexte d'un supercalculateur. Une grappe de serveurs est un système regroupant plusieurs ordinateurs indépendants appelés nœuds (« *node »* en anglais), afin de permettre une gestion globale permettant de dépasser les limitations d'un ordinateur unique. Cela permet, notamment, d'augmenter la disponibilité, de faciliter la montée en charge, de permettre une répartition de la charge, et de faciliter la gestion des ressources (processeur, mémoire vive, disques dur, bande passante réseau).

En outre, bien que la notion de fileset qui existe dans le GPFS ait été utilisée comme base pour la description de modes de mise en œuvre ci-dessus, l'enseignement de l'invention s'applique aussi bien à tout type d'environnement de stockage, en fonction des spécificités de l'application et notamment en fonction du système d'exploitation. Par exemple, sous Windows, les environnements de stockage sont des répertoires. L'Homme de métier sait comment affecter à un tel répertoire des paramètres ou propriétés définissant un niveau spécifique de performance d'accès aux données du répertoire. Ce résultat peut par exemple être obtenu grâce à une notion d'attribut du répertoire, comme dans le second mode de mise en œuvre décrit plus haut.

Dans les revendications, le terme "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclue pas cette possibilité. Les signes de référence ne sauraient être compris comme limitant la portée de l'invention.

## Revendications

1. Procédé de gestion d'un système de fichiers pour l'accès à des données dans un système de stockage (30) dans lequel les données sont stockées physiquement de manière unique, le procédé comprenant :
- le montage (100, avec i=1), à partir d'un premier point de montage, d'un premier environnement de stockage (20a) associé à un premier ensemble de paramètres d'accès, pour accéder à tout ou partie des données stockées physiquement de manière unique dans le système de stockage, avec un niveau de performance d'accès (QoS_1) déterminé par ledit premier ensemble de paramètres ;
- le montage (100, avec i=2), à partir d'un second point de montage et avec recouvrement total ou partiel de données par rapport au premier environnement de stockage, d'au moins un second environnement de stockage (20b), différent du premier environnement de stockage, et associé à un second ensemble de paramètres d'accès, différent du premier ensemble de paramètres d'accès, pour accéder à tout ou partie des données stockées physiquement de manière unique dans le système de stockage, avec un niveau de performance d'accès (QoS_2) déterminé par ledit second ensemble de paramètres d'accès ; et,
- l'accès (400) par l'utilisateur aux données physiquement stockées de manière unique dans le système de stockage, soit via le premier point de montage soit via le second point de montage, en fonction d'un cas d'usage des données.

2. Procédé selon la revendication 1, dans lequel le premier environnement de stockage et le second environnement de stockage sont tous les deux des environnements virtuels pointant vers un troisième environnement de stockage pour permettre l'accès aux données dudit troisième environnement de stockage avec un niveau de performance d'accès déterminé par le premier ensemble de paramètres d'accès ou par le second ensemble de paramètres d'accès, respectivement.

3. Procédé selon la revendication 2, dans lequel le troisième environnement de stockage est associé à un troisième ensemble de paramètres d'accès, différent du premier ensemble de paramètres d'accès et du second ensemble de paramètres d'accès.

4. Procédé selon la revendication 3, dans lequel le troisième ensemble de paramètres d'accès définit un niveau de performance d'accès spécifique à un administrateur, lequel niveau de performance d'accès n'est pas accessible à un utilisateur qui n'est pas administrateur.

5. Procédé selon la revendication 1, dans lequel le premier environnement de stockage est un environnement de stockage de référence et le second environnement de stockage est un environnement de stockage virtuel pointant sur le premier environnement de stockage pour permettre l'accès aux données dudit premier environnement de stockage avec un niveau de performance d'accès déterminé par le second ensemble de paramètres d'accès.

6. Procédé selon la revendication 5, dans lequel le second environnement de stockage possède un attribut indiquant qu'il est un environnement de stockage virtuel et présente un niveau de performances d'accès différent de celui de l'environnement de stockage de référence sur lequel il pointe.

7. Procédé selon l'une quelconque des revendications précédentes, dans lequel, le système de fichiers est un système Unix, et dans lequel le premier environnement de stockage et le second environnement de stockage sont des filesets Unix.

8. Procédé selon l'une quelconque des revendications, dans lequel le système de fichiers est un système de fichiers distribués.

9. Produit programme d'ordinateur comprenant un jeu d'instructions qui, lorsqu'il est exécuté par des moyens de traitement, est propre à mettre en œuvre le procédé selon l'une des revendications précédentes pour gérer un système de fichiers pour l'accès à des données dans un système de stockage au sein d'un calculateur haute performance (CHP).

10. Calculateur haute performance (CHP) comportant un ensemble de nœuds de service (50) ayant des ressources de différents types aptes chacun à réaliser au moins une opération, un système de stockage (30) dans lequel des données sont stockées physiquement de manière unique, et des ressources de traitement aptes à gérer un système de fichiers (FS) pour l'accès à des données dans ledit système de stockage selon le procédé de l'une quelconque des revendications 1 à 8.

## Patentansprüche

1. Verwaltungsverfahren eines Dateisystems für den Zugriff auf die Daten in einem Speichersystem (30), in dem die Daten physisch auf einzigartige Weise gespeichert sind, wobei das Verfahren umfasst:
- die Montage (100, wobei i = 1 ist), ausgehend von einem ersten Montagepunkt, einer ersten Speicherumgebung (20a), die einer ersten Gruppe von Zugriffsparametern zugeordnet ist, um auf alle oder einen Teil der Daten zurückzugreifen, die physisch auf einzigartige Weise in dem Speichersystem gespeichert sind, mit einem Zugriffs-Leistungsniveau (QoS_1), das von der genannten ersten Gruppe von Parametern bestimmt wird;
- die Montage (100, wobei 1 = 2) wenigstens einer zweiten Speicherumgebung (20b), die von der ersten Speicherumgebung unterschiedlich ist und einer zweiten Gruppe von Zugriffsparametern zugeordnet ist, die von der ersten Gruppe von Zugriffsparametern unterschiedlich ist, ausgehend von einem zweiten Montagepunkt und mit totaler oder teilweiser Abdeckung von Daten in Bezug auf die erste Speicherumgebung, um auf alle oder einen Teil der Daten zuzugreifen, die physisch auf einzigartige Weise in dem Speichersystem gespeichert sind, mit einem Zugriffs-Leistungsniveau (QoS_2), das von der genannten zweiten Gruppe von Zugriffsparametern bestimmt wird; und
- den Zugriff (400) durch den Nutzer auf die Daten, die physisch auf einzigartige Weise in dem Speichersystem, entweder über den ersten Montagepunkt oder über den zweiten Montagepunkt in Abhängigkeit von einem Nutzungsfall der Daten gespeichert sind.

2. Verfahren gemäß Anspruch 1, bei dem die erste Speicherumgebung und die zweite Speicherumgebung alle beide virtuelle Umgebungen sind, die in Richtung einer dritten Speicherumgebung ausgerichtet sind, um den Zugriff auf die Daten der genannten dritten Speicherumgebung mit einem Zugriffs-Leistungsniveau zu erlauben, das jeweils von der ersten Gruppe von Zugriffsparametern oder von der zweiten Gruppe von Zugriffsparametern bestimmt wird.

3. Verfahren gemäß Anspruch 2, bei dem die dritte Speicherumgebung einer dritten Gruppe von Zugriffsparametern zugeordnet ist, die von der ersten Gruppe von Zugriffsparametern und der zweiten Gruppe von Zugriffsparametern unterschiedlich ist.

4. Verfahren gemäß Anspruch 3, bei dem die dritte Gruppe von Zugriffsparametern ein für einen Administrator spezifisches Zugriffs-Leistungsniveau definiert, wobei das genannte Zugriffs-Leistungsniveau einem Nutzer, der kein Administrator ist, nicht zugänglich ist.

5. Verfahren gemäß Anspruch 1, bei dem die erste Speicherumgebung eine Referenz-Speicherumgebung ist und die zweite Speicherumgebung eine virtuelle Speicherumgebung ist, die in Richtung auf die erste Speicherumgebung ausgerichtet ist, um den Zugriff auf die Daten der genannten ersten Speicherumgebung mit einem Zugriffs-Leistungsniveau zu erlauben, das von der zweiten Gruppe von Zugriffsparametern bestimmt wird.

6. Verfahren gemäß Anspruch 5, bei dem die zweite Speicherumgebung ein Attribut besitzt, das angibt, dass sie eine virtuelle Speicherumgebung ist und ein Zugriffs-Leistungsniveau aufweist, das von dem der Referenz-Speicherumgebung unterschiedlich ist, in dessen Richtung es ausgerichtet ist.

7. Verfahren gemäß irgendeinem der voranstehenden Ansprüche, bei dem das Dateisystem ein Unix-System ist und bei dem die erste Speicherumgebung und die zweite Speicherumgebung Unix-Filesets sind.

8. Verfahren gemäß irgendeinem der Ansprüche, bei dem das Dateisystem ein System aus verteilten Dateien ist.

9. Computerprodukt-Programm, umfassend einen Anweisungssatz, der, wenn er von Verarbeitungsmitteln ausgeführt wird, geeignet ist, das Verfahren gemäß einem der voranstehenden Ansprüche umzusetzen, um ein Dateisystem für den Zugriff auf Daten in einem Speichersystem innerhalb eines Hochleistungsrechners (CHP) zu verwalten.

10. Hochleistungsrechner (CHP), umfassend eine Gruppe von Dienstknoten (50) mit Ressourcen unterschiedlicher Typen, die jeweils geeignet sind, wenigstens eine Operation zu realisieren, ein Speichersystem (30), in dem Daten physisch auf einzigartige Weise gespeichert sind, und Verarbeitungsressourcen, die geeignet sind, ein Dateisystem (FS) für den Zugriff auf Daten in dem genannten Speichersystem gemäß dem Verfahren irgendeines der Ansprüche 1 bis 8 zu verwalten.

## Claims

1. Method for the management of a file system for accessing data in a storage system (30) in which the data is stored physically in a unique manner, with the method comprising:
- the mounting (100, with i=1), from a first mount point, of a first storage environment (20a) associated with a first set of access parameters, to access all or a portion of the data physically stored in a unique manner in the storage system, with an access performance level (QoS_1) determined by said first set of parameters;
- the mounting (100, with i=2), from a second mount point and with total or partial overlay of data with respect to the first storage environment, of at least one second storage environment (20b), different from the first storage environment, and associated with a second set of access parameters, different from the first set of access parameters, to access all or a portion of the data physically stored in a unique manner in the storage system, with an access performance level (QoS_2) determined by said second set of access parameters; and,
- access (400) by the user to the data physically stored in a unique manner in the storage system, either via the first mount point or via the second mount point, as a function of a data use case.

2. Method according to claim 1, in which the first storage environment and the second storage environment are both virtual environments pointing to a third storage environment in order to allow for access to the data of said third storage environment with an access performance level determined by the first set of access parameters or by the second set of access parameters, respectively.

3. Method according to claim 2, in which the third storage environment is associated with a third set of access parameters, different from the first set of access parameters and from the second set of access parameters.

4. Method according to claim 3, in which the third set of access parameters defines an access performance level specific to an administrator, which access performance level is not accessible to a user who is not an administrator.

5. Method according to claim 1, in which the first storage environment is a reference storage environment and the second storage environment is a virtual storage environment pointing to the first storage environment in order to allow for access to the data of said first storage environment with an access performance level determined by the second set of access parameters.

6. Method according to claim 5, in which the second storage environment has an attribute that indicates that it is a virtual storage environment and has an access performance level that is different from that of the reference storage environment to which it points.

7. Method according to any preceding claim, in which, the file system is a Unix system, and in which the first storage environment and the second storage environment are Unix file sets.

8. Method according to any of claims, in which the file system is a distributed file system.

9. Compute program product comprising a set of instructions that, when it is executed by processing means, is able to implement the method according to one of the preceding claims to manage a file system for accessing data in a storage system within a high performance computing (HPC) computer.

10. High performance computing (HPC) computer comprising a set of service nodes (50) that have resources of different types each able to perform at least one operation, a storage system (30) in which data is physically stored in a unique manner, and processing resources able to manage a file system (FS) for accessing data in said storage system according to the method of any of claims 1 to 8.
